# EUROPÄISCHE PATENTANMELDUNG

(11) **EP 1 467 457 A1**
(43) Veröffentlichungstag der Anmeldung: **13.10.2004**
(21) Anmeldenummer: 03100990.5
(22) Anmeldetag: 11.04.2003
(51) Int. Cl.: H02G 11/02, B65H 75/48

(54) **Bausatz für eine Feder-Leitungstrommel**

(71) Anmelder: IPALCO B.V., 2952 BB Alblasserdam (NL)
(72) Erfinder: Gieseke, Christoph, 51065, Köln (DE)
(74) Vertreter: Schmitt, Armand

(57) **Zusammenfassung**

Ein Bausatz für eine Feder-Leitungstrommel umfasst einen vormontierten Trommelkern (12) dessen Gehäuse eine Wickelfläche für die Leitung ausbildet und in dem mindestens eine Spiralfeder (74, 74') und mindestens eine Federnuss (80, 80') untergebracht sind. Der vormontierte Trommelkern (12) weist einen durchgehenden Achsenkanal ohne Achse auf. Die Federnuss (80, 80') ist durch die Spiralfeder (74, 74') im wesentlichen axial in diesem Achsenkanal gehalten. Der Bausatz umfasst weiterhin eine separate Achse (16), die von beiden Seiten in den Achsenkanal des vormontierten Trommelkerns (12) einsteckbar ist, wobei beim Einstecken der Achse (16) in den Achsenkanal jeweils eine formschlüssige Drehverbindung zwischen der Federnuss (80, 80') und der Achse (16) hergestellt wird.

## Beschreibung

Die vorliegende Erfindung betrifft allgemein eine Feder-Leitungstrommel und insbesondere einen Bausatz für eine solche Trommel.

### Stand der Technik

Bekannte Feder-Leitungstrommeln umfassen einen Trommelkörper, der drehbar auf einer Achse gelagert ist und zwischen zwei seitlichen Ronden eine Wickelfläche für eine Leitung ausbildet. Eine oder mehrere Spiralfedern erzeugen ein Federmoment entgegen der Abzugsdrehrichtung, so dass die Leitung beim Abspulen unter Vorspannung gehalten wird. Es gibt folglich Feder-Leitungstrommeln, die für eine Abzugsdrehrichtung nach links und Feder-Leitungstrommeln die für eine Abzugsdrehrichtung nach rechts ausgelegt sind.

Um die Lagerhaltung zu vereinfachen, wurde in der EP 0802601 eine Feder-Leitungstrommel vorgestellt, die für die gewünschte Abzugsdrehrichtung umgebaut werden kann. Diese Feder-Leitungstrommel besteht im wesentlichen aus einem Trommelmantel, der die Wickelfläche für die Leitung ausbildet, zwei seitlichen Trommelschildern, davon einer mit integriertem Lager, einem Schleifringkörper mit einer gemeinsamen Achse, einem seitlichen Befestigungsflansch für das freie Ende dieser Achse, eine über eine Federnuss auf die Achse geschobene, gekapselte Federkassette und einen Stellring zum Festhalten der Federnuss auf der Achse. Falls eine Umstellung der Abzugsdrehrichtung von links auf rechts gewünscht ist, wird der Befestigungsflansch gelöst und das Trommelschild mit Lager von der Achse abgezogen. Danach können die Federkassette und die Federnuss aus dem Trommelmantel herausgenommen werden, ebenso der Stellring. Anschließend werden Federkassette, Federnuss und Stellring um 180° gedreht und in umgekehrter Reihenfolge wieder auf die gemeinsame Achse aufgeschoben. Abschließend werden dann der Trommelschild mit dem Lager und der Befestigungsflansch wiederum montiert. Da dieser Umbau relativ kompliziert ist, muss er normalerweise durch einen Fachmann vorgenommen werden.

Eine Aufgabe der vorliegenden Erfindung ist es, dem Endkunden einen Bausatz zur Verfügung zu stellen, mit dem er auf einfachste Art und Weise eine Federleitungstrommel für eine Abzugsdrehrichtung nach links und eine Feder-Leitungstrommeln für eine Abzugsdrehrichtung nach rechts zusammenbauen kann. Diese Aufgabe wird durch einen Bausatz nach Anspruch 1 gelöst.

### Kennzeichnung der Erfindung

Ein erfindungsgemäßer Bausatz für eine Feder-Leitungstrommel umfasst einen vormontierten Trommelkern dessen Gehäuse eine Wickelfläche für die Leitung ausbildet und in dem mindestens eine Spiralfeder und mindestens eine Federnuss untergebracht sind, wobei dieser vormontierte Trommelkern einen durchgehenden Achsenkanal ohne Achse aufweist, und die Federnuss durch die Spiralfeder im wesentlichen axial in diesem Achsenkanal gehalten ist. Diesem Bausatz ist eine separate Achse beigefügt, welche von beiden Seiten in den Achsenkanal des vormontierten Trommelkerns einsteckbar ist, wobei beim Einstecken der Achse in den Achsenkanal jeweils eine formschlüssige Drehverbindung zwischen der Federnuss und der Achse hergestellt wird. Mit diesem Bausatz lässt sich folglich die Abzugsdrehrichtung auf einfachste Art und Weise durch ein Umdrehen des gesamten vormontierten Trommelkerns festlegen. Zusätzlich ist anzumerken, dass sich ein erfindungsgemäßer Bausatz sehr leicht und sicher für den Versand verpacken lässt.

Die formschlüssige Drehverbindung zwischen Federnuss und Achse kann z.B. durch eine Längszahnung oder einen Längskeil hergestellt werden. Vorzugsweise wird ein zylindrischer Längskeil eingesetzt, der lose in einer Längsbohrung der Federnuss angeordnet ist, wobei die Achse in Längsrichtung eine zylindrische Keilnut aufweist.

Der vormontierte Trommelkern weist vorzugsweise zwei gleichgroße Kugellager auf, welche jeweils einen Ausgang des Achsenkanals im Trommelkern ausbilden, so dass eine symmetrische Lagerung des Trommelkerns gewährleistet ist.

In der normalen Ausstattung umfasst der Bausatz zusätzlich einen Befestigungsflansch, der an einem Ende der Achse befestigt ist bzw. wird. Dieser Befestigungsflansch weist dann vorteilhaft einen zylindrischen Ansatz auf, der derart dimensioniert ist, dass er mit dem Innenring des Kugellagers einen Schiebesitz ausbildet. In den Innenring des gegenüberliegenden Kugellagers wird dann vorteilhaft eine Lagermuffe eingesteckt, die ebenfalls derart dimensioniert ist, dass sie mit diesem Innenring einen Schiebesitz ausbildet.

Für die meisten Anwendungsfälle umfasst der Bausatz weiterhin einen Schleifringkörper mit einer feststehenden Schleifringsäule, die am zweiten Ende der Achse festgeklemmt wird, und einem Schleifringkörpergehäuse. An beiden Seiten des vormontierten Trommelkerns sind hierbei Befestigungsmöglichkeiten für das Schleifringkörpergehäusevorgesehen, so dass der Schleifringkörper, in Abhängigkeit der gewünschten Abzugsdrehrichtung, auf beiden Seiten des vormontierten Trommelkerns angeordnet werden kann.

Im vormontierten Trommelkern sind normalerweise zwei Federeinheiten angeordnet. Die erster Federeinheit umfasst eine erste Federdose und eine erste Spiralfeder, wobei das äußere Ende der ersten Spiralfeder sich auf der ersten Federdose abstützt. Die zweite Federeinheit umfasst eine zweite Federdose und eine zweite Spiralfeder, wobei das äußere Ende der zweiten Spiralfeder sich auf der zweiten Federdose abstützt. Eine erste Federnuss, wird von dem inneren Ende der ersten Spiralfeder axial im Achsenkanal getragen.

In einer ersten Ausführung wird eine zweite Federnuss von dem inneren Ende der zweiten Spiralfeder axial im Achsenkanal getragen. Beim Einstecken der Achse in den Achsenkanal wird eine formschlüssige Drehverbindung zwischen der ersten Federnuss und der Achse und der zweiten Federnuss und der Achse hergestellt. Die beiden Federdosen sind in dieser ersten Ausführung drehfest mit dem Trommelkern verbunden, so dass die erste und zweite Spiralfeder parallel geschaltet sind. Zum drehfesten Verbinden mindestens einer der Federdosen mit dem Gehäuse des Trommelkerns, umfasst der Bausatz vorteilhaft mindestens einen Einsteckstift.

In einer zweiten Ausführung wird eine zweite Federnuss mit der ersten Federdose drehfest verbunden. Beim Einstecken der Achse in den Achsenkanal wird eine formschlüssige Drehverbindung zwischen der ersten Federnuss und der Achse hergestellt, jedoch nicht zwischen der zweiten Federnuss und der Achse. In dieser Ausführung ist die zweite Federdose drehfest mit dem Trommelkern verbunden, jedoch nicht die erste Federdose, so dass die erste und zweite Spiralfeder in Reihe geschaltet sind.

Der vormontierte Trommelkern ist vorzugsweise ein zylindrischer Körper, dessen Mantelfläche unmittelbar eine Wickelfläche für eine Leitung ausbildet. Der Bausatz umfasst einen Satz Ronden, wobei an jeder Seite des vormontierten Trommelkerns eine Ronde befestigt wird. Dadurch dass Ronden in verschiedenen Größen und Ausführungen an den Trommelkern angeschraubt werden können, lässt sich mit einem Trommelkern ein großes Anwendungsfeld abdecken. Zudem sind die noch nicht montierten Ronden beim Versand weitaus besser gegen Beschädigungen zu schützen.

### Figurenaufstellung

Im Folgenden werden nun bevorzugte Ausgestaltungen der Erfindung anhand der beiliegenden Figuren beschrieben. Es zeigen:
- Fig. 1:: einen Längsschnitt einer Feder-Leitungstrommel, mit zwei Spiralfedern in Parallelschaltung;
- Fig. 2:: einen Querschnitt entlang der Schnittlinie 2-2' in Fig. 1;
- Fig. 3:: einen Querschnitt entlang der Schnittlinie 3-3' in Fig. 1;
- Fig. 4:: einen Längsschnitt einer Feder-Leitungstrommel, mit zwei Spiralfedern in Reihenschaltung;
- Fig. 5:: einen Querschnitt entlang der Schnittlinie 5-5' in Fig. 4;
- Fig. 6:: einen Querschnitt entlang der Schnittlinie 6-6' in Fig. 4.

### Beschreibung einer bevorzugten Ausgestaltung der Erfindung anhand der Figuren

Die in den Figuren gezeigte Feder-Leitungstrommel 10 wird aus einem erfindungsgemäßen Bausatz zusammengesetzt, wobei im wesentlichen folgende Bauteile zur Anwendung gelangen: ein vormontierter Trommelkern 12, ein Befestigungsflansch 14, eine Achse 16, eine Lagermuffe 18, ein Paar Ronden 20, 20'. und ein Schleifringkörper 22.

Der vormontierte Trommelkern 12 umfasst ein zylindrisches Gehäuse, das sich im wesentlichen aus zwei Stirnscheiben 26, 26' und einem Mantel 28 zusammensetzt. Die beiden Stirnscheiben 26, 26' sind mittels Gewindestiften (nicht gezeigt) axial zusammengehalten. Der Mantel 28 ist zwischen den beiden Stirnscheiben 26, 26' eingespannt und bildet eine Wickelfläche für eine Leitung (nicht gezeigt) aus. Diese Wickelfläche wird seitlich durch die beiden Ronden 20, 20' begrenzt, welche mittels Schrauben 30 (nur durch eine gestrichelte Linie angedeutet) an den Stirnscheiben 26, 26' befestigt sind. In jeder der Stirnscheiben 26, 26', ist ein Kugellager 32, 32' mit seinem Außenring in eine Bohrung eingepresst. Beide Kugellager 32, 32' sind identisch und weisen insbesondere den gleichen inneren Lagerdurchmesser auf. Sie bilden die Ausgänge eines Achsenkanals im vormontierten Trommelkern 12.

Der Befestigungsflansch 14 weist eine Befestigungsplatte 34 und einen Sockel 36 mit einer zentralen Bohrung für die Achse 16 auf. Letztere weist ein Montageende 38 auf, das in die Bohrung des Sockels 36 eingeführt ist und hierin mittels einer Klemmschraube 39 festgeklemmt ist. Das vordere Ende des Sockels 36 ist als zylindrischer Ansatz 40 ausgebildet, welcher derart dimensioniert ist, dass er mit dem Innenring des Kugellagers 32 einen Schiebesitz ausbildet. Der Innenring 42 liegt axial an einer Schulterfläche 44 des Sockels 36 an. Eine Lippendichtung 46 dichtet den Ringspalt zwischen Stirnscheibe 26 und Sockel 36 ab.

Im zweiten Kugellager 32' ist die Lagermuffe 18 angeordnet, die ebenfalls derart dimensioniert ist, dass sie mit dem Innenring 42' des Kugellagers 32' einen Schiebesitz ausbildet. Die Lagermuffe 18 ist auf der Achse 16 axial verschiebbar und liegt mit einer Schulterfläche 46 axial an dem Innenring 42' des Kugellager 32' an. Das zweite Ende 50 der Achse 16 ragt aus der Lagermuffe 18 hervor. In axialer Richtung ist die Lagermuffe 18 mittels eines Sicherungsrings 51 auf der Achse 16 blockiert. Die axial blockierte Lagermuffe 18 hält hierbei den vormontierten Trommelkern 12 mit dem Innenring 42 seines Kugellagers 32 in Anschlag an der Schulterfläche 44 des gegenüberliegenden Befestigungsflansches 14. Der Sicherungsring 51 ist z.B. ein Sicherungsring nach DIN 471.

Der Schleifringkörper 22 umfasst im wesentlichen eine Schleifringsäule 52 mit Schleifringen, Stromabnehmer 56 und ein geschlossenes, zweiteiliges Gehäuse 60. Die Schleifringsäule 52 ist mittels einer Klemmschraube 62 am zweiten Ende 50 der Achse 16 befestigt.. Das Gehäuse 60 ist mittels Schrauben 66 auf die Stirnscheibe 26' aufgeschraubt. Die Stromabnehmer 56 sind am Gehäuse 60 befestigt. Wenn sich der Trommelkern 12 um die Achse 16 dreht, drehen sich folglich auch die Stromabnehmer 56 um die feststehende Schleifringsäule 52.

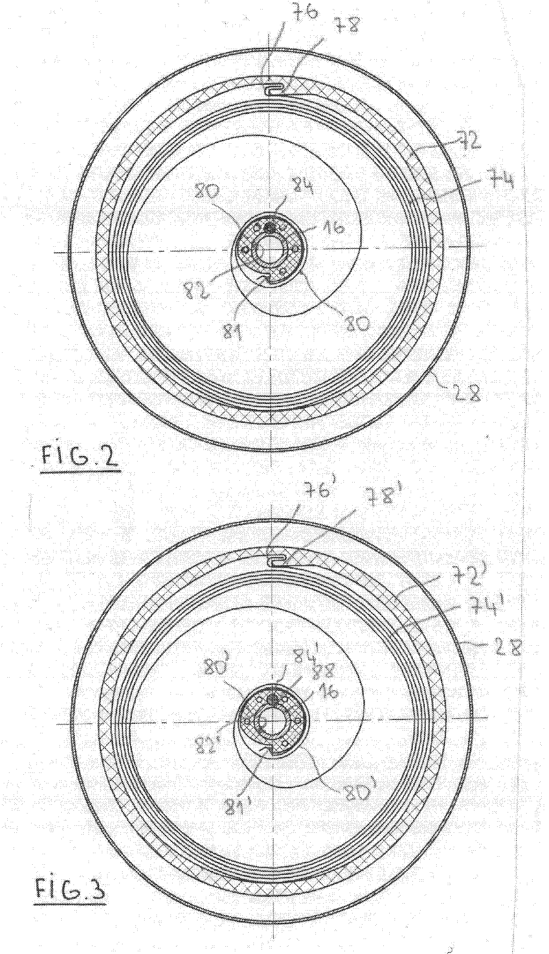

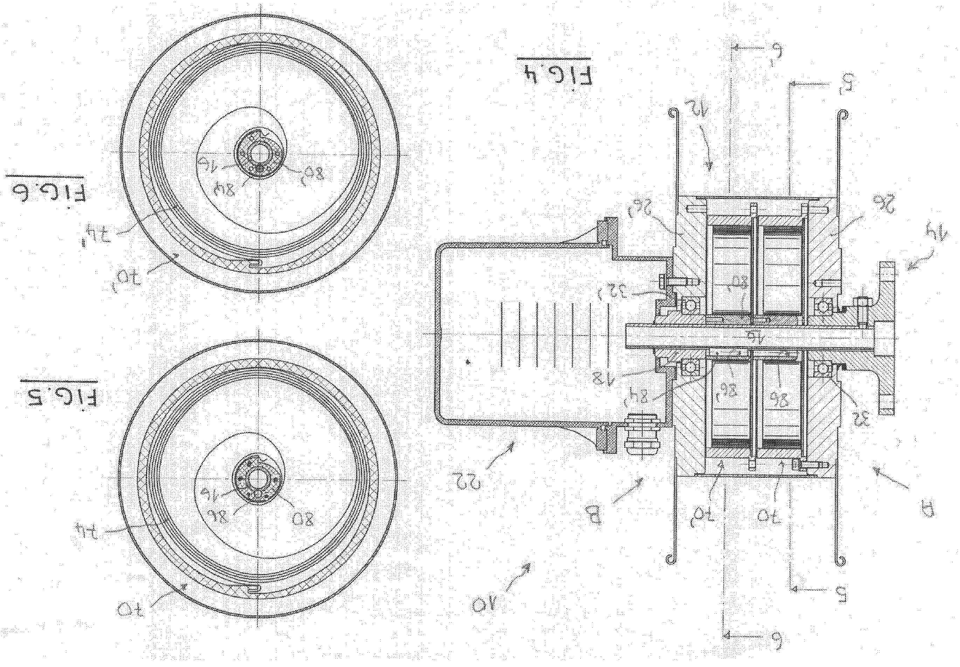

Innerhalb des Trommelkerns 12 sind zwischen den beiden Stirnscheiben 26, 26', zwei Federeinheiten 70, 70' axial hintereinander angeordnet. Jede Federeinheit 70, 70' umfasst eine Federdose 72, 72' und eine Spiralfeder 74, 74', welche in der Federdose 72, 72' angeordnet ist. Wie aus den Fig. 2 und 3 ersichtlich, greift das äußere Ende 76, 76' einer jeden Spiralfeder 74, 74' in eine Hakenleiste 78, 78' der Federdose 72, 72' ein. Im inneren Spiralring 80, 80' der beiden Spiralfedern 74, 74', ist jeweils eine Federnuss 80, 80' angeordnet. Das innere Ende der Spiralfeder 74, 74' stützt sich hierbei auf einer Schulterfläche 81, 81' seiner Federnuss 80, 80' ab. Man beachte ebenfalls, dass bei herausgenommener Achse 16, die Federnuss 80, 80' durch die jeweilige Spiralfeder 74, 74' im wesentlichen axial in dem offenen Achsenkanal des Trommelkerns 12 gehalten wird.

Jeder der Federnüsse 80, 80' weist eine Durchgangsbohrung 82, 82' für die Achse 16 auf. Mittels eines Längskeils 84, bzw. 84', kann beim Einstecken der Achse 16 in den Achsenkanal eine formschlüssige Drehverbindung zwischen der Federnuss 80, bzw. 80', und der Achse 16 hergestellt werden, so dass das innere Ende der Spiralfeder 74, 74' sich mittels der Federnuss 80, bzw. 80', auf der feststehenden Achse 16 abstützen kann. Beim Längskeil 84, 84' handelt es sich vorzugsweise um einen zylindrischen Keil, der in eine Keilbohrung 86, 86' der Federnuss 80, 80' eingeschoben ist. Diese Keilbohrung 86, 86' ist in der Federnuss 80, 80' entlang der Durchgangsbohrung 82, 82' derart angeordnet, dass der zylindrische Keil 84, 84' noch teilweise in die Durchgangsbohrung 82, 82' hereinragt. Beim Durchstecken der Achse 16, wirkt der zylindrische Keil 84, 84' mit einer zylindrischen Keilnut 88 zusammen, welche in Längsrichtung in die Mantelfläche der Achse 16 eingearbeitet ist. Hierbei wird eine formschlüssige Drehverbindung zwischen der Federnuss 80, bzw. 80', und der Achse 16 hergestellt. Wird hingegen kein Keil in die Keilbohrung 86, 86' einer Federnuss 80, 80' eingeschoben, kann diese Federnuss 80, 80' relativ zur Achse 16 verdreht werden.

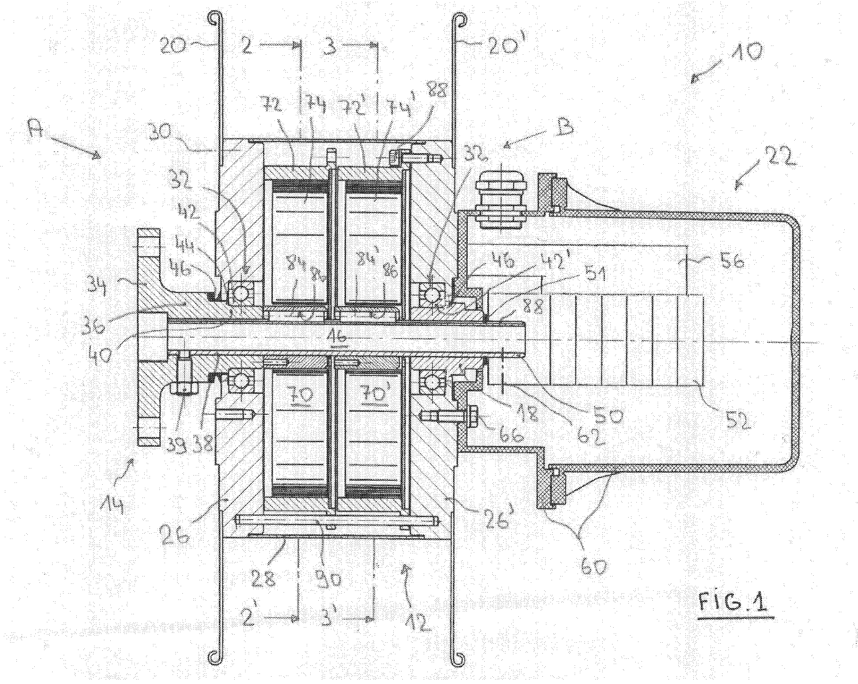

In der Ausführung der Figuren 1 bis 3, ist in die Keilbohrung 86, 86' jeder der beiden Federnüsse 80, 80' ein Keil 84, 84' eingeschoben. Die Federdosen 72, 72' sind zudem beide drehfest mit dem Gehäuse verbunden. Hierzu ist zum Beispiel die Federdose 72 mittels Schrauben 88 an die Stirnscheibe 26' festgeschraubt, und die Federdose 72 mittels Stiften 90 drehfest blockiert. Beide Spiralfedern 74, 74' sind somit parallel geschaltet, wodurch die zur Verfügung stehende Federkraft verdoppelt wird.

In der Ausführung der Figuren 4 bis 6, ist in die Keilbohrung 86' der Federnuss 80' ein Keil 84' eingeschoben. Die Keilbohrung 86 der Federnuss 80, die an der Federdose 72' festgeschraubt ist, ist jedoch leer. Die Federdose 72 ist drehfest mit dem Trommelkern 12 verbunden, nicht jedoch die Federdose 72'. Beide Spiralfedern 74, 74' sind somit in Reihe geschaltet, wodurch der zur Verfügung stehende Federweg verdoppelt wird.

Man beachte, dass man die Abzugsdrehrichtung der Feder-Leitungstrommel 10 ändern kann, ohne die Federeinheiten 70, 70' herauszunehmen, ja sogar ohne den Trommelkern 12 zu öffnen. In der Tat, kann die Abzugsdrehrichtung der Feder-Leitungstrommel 10 einfach dadurch festgelegt werden, dass der Befestigungsflansch 14 entweder auf der A-Seite oder der B-Seite des Trommelkerns 12 angeordnet wird. Um die Abzugsdrehrichtung der Feder-Leitungstrommel 10 der Fig. 1 oder 2 umzukehren, müsste man folglich lediglich den Schleifringkörper 22 demontieren, anschließend den Trommelkern 12 von der Achse 16 abziehen, die Lagermuffe 18 aus dem Kugellager 32' herausnehmen und in das Kugellager 32 einsetzen, bevor man den Trommelkern 12 diesmal mit der B-Seite zum Befestigungsflansch 14 auf die Achse 16 setzt, und den Schleifringkörper 22 auf der A-Seite des Trommelkerns 12 montiert.

Man beachte weiterhin, dass ein erfindungsgemäßer Bausatz für eine Feder-Leitungstrommel sich relativ einfach und sicher für den Versand verpacken lässt, weil man den vormontierter Trommelkern 12, die Achse 16, die Ronden 20, 20' und den Schleifringkörper 22 als Einzelteile in einer Kiste unterbringen kann.

Vom Kunden lässt sich die Feder-Leitungstrommel 10 sehr einfach zusammenbauen, wobei er die Abzugsdrehrichtung der Feder-Leitungstrommel 10 bei der Montage ohne Aufwand auf rechts oder links festlegen kann, indem er entweder die A-Seite oder die B-Seite der Federtrommel 12 dem Befestigungsflansch 14 zukehrt.

Dadurch, dass an den Trommelkern 12 Ronden 20, 20' in verschiedenen Größen und Ausführungen angeschraubt werden können, lässt sich mit einem Trommelkern 12 ein großes Anwendungsfeld abdecken.

Durch die vorbeschriebene Parallel- oder Reihenschaltung der Spiralfedern 36, 36', lassen sich zudem die Federkraft, bzw. der Federweg auf einfachste Art und Weise anpassen.

## Patentansprüche

1. Bausatz für eine Feder-Leitungstrommel **gekennzeichnet durch**:
einen vormontierten Trommelkern (12) dessen Gehäuse eine Wickelfläche für die Leitung ausbildet und in dem mindestens eine Spiralfeder (74, 74') und mindestens eine Federnuss (80, 80') untergebracht sind, wobei dieser vormontierte Trommelkern (12) einen durchgehenden Achsenkanal ohne Achse aufweist, und die Federnuss (80, 80') **durch** die Spiralfeder (74, 74') im wesentlichen axial in diesem Achsenkanal gehalten ist; und
eine separate Achse (16), die von beiden Seiten in den Achsenkanal des vormontierten Trommelkerns (12) einsteckbar ist, wobei beim Einstecken der Achse (16) in den Achsenkanal jeweils eine formschlüssige Drehverbindung zwischen der Federnuss (80, 80') und der Achse (16) hergestellt wird.

2. Bausatz nach Anspruch 1, wobei die formschlüssige Drehverbindung zwischen Federnuss (80, 80') und Achse (16) durch einen Längskeil (84, 84') hergestellt wird.

3. Bausatz nach Anspruch 2, wobei:
die formschlüssige Drehverbindung zwischen Federnuss (80, 80') und Achse (16) durch einen zylindrischen Längskeil (84, 84') hergestellt wird, der lose in einer Längsbohrung der Federnuss (80, 80') angeordnet ist; und
die Achse (16) in Längsrichtung eine zylindrische Keilnut (88) aufweist.

4. Bausatz nach einem der Ansprüche 1 bis 3, wobei der vormontierte Trommelkern (12) zwei gleichgroße Kugellager (32, 32') aufweist, welche jeweils einen Ausgang des Achsenkanals im Trommelkern (12) ausbilden.

5. Bausatz nach Anspruch 4, umfassend einen Befestigungsflansch, der an einem Ende der Achse (16) befestigbar ist und einen zylindrischen Ansatz aufweist, wobei dieser Ansatz derart dimensioniert ist, dass er mit dem Innenring der beiden Kugellager (32, 32') einen Schiebesitz ausbildet.

6. Bausatz nach Anspruch 5, umfassend weiterhin eine Lagermuffe (18), die in den Innenring des gegenüberliegenden Kugellagers (32') eingesteckt wird und derart dimensioniert ist, dass sie mit diesem einen Schiebesitz ausbildet.

7. Bausatz nach Anspruch 6, umfassend Blockiermittel zum axialen Blockieren der Lagermuffe (18) auf der Achse (16).

8. Bausatz nach einem der Ansprüche 1 bis 7, umfassend einen Schleifringkörper (22) mit:
einer feststehenden Schleifringsäule (52) die am zweiten Ende der Achse (16) festgeklemmt wird; und
einem Schleifringkörpergehäuse (60) mit Stromabnehmern (56);
wobei an beiden Seiten des vormontierten Trommelkerns (12) Befestigungsmöglichkeiten für das Schleifringkörpergehäuse (60) vorgesehen sind, so dass der Schleifringkörper (22), in Abhängigkeit der gewünschten Abzugsdrehrichtung, auf beiden Seiten des vormontierten Trommelkerns (12) angeordnet werden kann.

9. Bausatz nach einem der Ansprüche 1 bis 8, wobei im vormontierten Trommelkern (12) angeordnet sind:
eine erste Federeinheit (70') umfassend eine erste Federdose (72') und eine erste Spiralfeder (74'), wobei das äußere Ende der ersten Spiralfeder (74') sich auf der ersten Federdose (70') abstützt;
eine erste Federnuss (80'), welche von dem inneren Ende der ersten Spiralfeder (74') axial im Achsenkanal getragen wird;
eine zweite Federeinheit (70') umfassend eine zweite Federdose (72') und eine zweite Spiralfeder (74), wobei das äußere Ende der zweiten Spiralfeder (74) sich auf der zweiten Federdose (70) abstützt; und
eine zweite Federnuss (80).

10. Bausatz nach Anspruch 9, wobei:
die zweite Federnuss (80) von dem inneren Ende der zweiten Spiralfeder (74) axial im Achsenkanal getragen wird;
beim Einstecken der Achse (16) in den Achsenkanal eine formschlüssige Drehverbindung zwischen der ersten Federnuss (80') und der Achse (16) und der zweiten Federnuss (80) und der Achse (16) hergestellt wird; und
die beiden Federdosen (72, 72') drehfest mit dem Gehäuse des Trommelkerns (12) verbunden sind, so dass die erste und zweite Spiralfeder (74, 74') parallel geschaltet sind.

11. Bausatz nach Anspruch 10, umfassend mindestens einen Einsteckstift (90) zum drehfesten Verbinden mindestens einer der Federdosen (72, 72') mit dem Gehäuse des Trommelkerns (12).

12. Bausatz nach Anspruch 9, wobei:
die zweite Federnuss (80) mit der ersten Federdose (72') drehfest verbunden ist;
beim Einstecken der Achse (16) in den Achsenkanal eine formschlüssige Drehverbindung zwischen der ersten Federnuss (80') und der Achse (16) hergestellt wird, jedoch nicht zwischen der zweiten Federnuss (80) und der Achse (16); und
die zweite Federdose (72) drehfest mit dem Gehäuse des Trommelkerns (12) verbunden ist, jedoch nicht die erste Federdose (72'), so dass die erste und zweite Spiralfeder (74, 74') in Reihe geschaltet sind.

13. Bausatz nach einem der Ansprüche 1 bis 12, wobei das Gehäuse des vormontierten Trommelkerns (12) ein zylindrischer Körper ist, dessen Mantelfläche unmittelbar eine Wickelfläche für eine Leitung ausbildet.

14. Bausatz nach Anspruch 12, umfassend einen Satz Ronden (20, 20'), wobei an jeder Seite des vormontierten Trommelkerns (12) eine Ronde (20, 20') befestigt wird.
